# EUROPEAN PATENT SPECIFICATION

(11) **EP 3 757 440 B1**
(45) Date of publication and mention of the grant of the patent: **12.10.2022**
(21) Application number: 19182967.0
(22) Date of filing: 27.06.2019
(51) Int. Cl.: F16L 37/14, F16L 27/08

(54) **ROTATABLE CONNECTION ASSEMBLY FOR METAL WATER TUBES**
DREHBARE VERBINDUNGSANORDNUNG FÜR METALLWASSERROHRE
ENSEMBLE DE CONNEXION ROTATIF POUR TUBES D'EAU EN MÉTAL

(43) Date of publication of application: 30.12.2020
(73) Proprietor: Yuan Mei Corp., Chang Hua Hsien (TW)
(72) Inventor: LO, Shun-Nan, CHANG HUA HSIEN (TW)
(74) Representative: Boult Wade Tennant LLP

(56) References cited:
- EP-A1- 2 921 759
- EP-A2- 1 024 324
- US-A1- 2014 097 614

## Description

### TECHNICAL FIELD

The present disclosure relates to a rotatable connection assembly for metal water tubes.

### BACKGROUND

Conventional metal water tubes are connected by ways of threads. For example, two metal water tubes are connected with a faucet and a connector of a garden sprinkler, wherein a connection portion of each of the two metal water tubes is machined precisely, and a gap of the connection portion is fitted with a waterproof rubber ring or is winded by a waterproof tape. Further, a screw nut is screwed with the connection portion of each metal water tube by mating with a leakproof washer.

The screw nut is locked by ways of a wrench, thus deforming or damaging the screw nut. The leakproof washer causes fatigue after a period of using time, thus leaking water.

Each metal water tube is formed by casting, so an error of the threads can easily occur. To overcome this problem, each metal water tube is turned by a lathe, thus having a high machining cost.

The pipe fittings contain two water connectors, one of which is accommodated in a holding disc configured to flow the fluid, wherein the holding disc has a semispherical filter, and the two water connectors are mounted by screwing at least one nut with threads of the two water connectors, wherein two seal gaskets are fixed on two screwing portions of the two water connectors respectively.

However, a size of the filter is limited by the at least one connection pipe, thus reducing filtration efficiency.

Furthermore, the filter is removed after unscrewing the at least one nut by using a wrench.

US 2014/097614 A1 discloses a joint fastening structure including a first tube, a second tube, and at least one insert member. The first tube is provided at one end with a coupling section, on which at least one sealing portion and at least one locating portion are formed, and the sealing portion is configured for a sealing ring to fit therein. The second tube has a passageway for the coupling section to insert thereinto, and is formed on one side with at least one insertion portion. The insert member is inserted in the insertion portion to partially extend into the passageway in the second tube and engage with one side of the locating portion. With these arrangements, the first and second tubes can be coupled to each other, while the first tube is turnable relative to the second tube.

### SUMMARY

A connector assembly is provided according to claim 1.

A primary aspect of the present invention is to provide a rotatable connection assembly for metal water tubes which prevents water leakage and eliminates a machining process.

A further aspect of the present invention is to provide a rotatable connection assembly for metal water tubes which is connected easily without using a hand tool (such as a wrench).

Another aspect of the present invention is to provide a rotatable connection assembly for metal water tubes which is not machined precisely so as to reduce machining cost.

Other objects and features will be in part apparent and in part pointed out hereinafter.

To obtain above-mentioned aspects, a rotatable connection assembly for metal water tubes contains: a first pipe, a second pipe, and al least one bolt.

The first pipe includes a first connection segment and a first fixing segment, the first connection segment has a peripheral groove and a surround shoulder, and the peripheral groove accommodates a waterproof gasket.

The second pipe includes a second connection segment which has an internal fence and at least one orifice passing through the internal fence, the first connection segment is inserted into the second connection segment, and the internal fence abuts against the waterproof gasket matingly.

The at least one bolt is inserted into the at least one orifice respectively and is retained with the surround shoulder, the first pipe is stopped by the at least one bolt so as to avoid a removal from the second pipe, and the second pipe is rotatably connected with the first pipe.

Preferably, the second connection segment has the two orifices passing through the two sides of the internal fence respectively, and the two bolts are inserted into the two orifices respectively.

Preferably, the internal fence has an open portion, and the at least one orifice passes through the open portion.

Preferably, an outer diameter of the second connection segment is circular, and the second connection segment has multiple hollow extensions in which the two orifices are defined.

The rotatable connection assembly further contains a grip sleeve. Multiple cutouts may be defined in the grip sleeve, and the first pipe may include multiple teeth configured to engage with the multiple cutouts individually.

Preferably, the rotatable connection assembly further contains a leakproof ring, the first fixing segment has inner threads formed on an inner wall thereof, and the leakproof ring is fitted below a bottom of the inner threads.

Preferably, the second pipe includes a second fixing segment having outer threads formed on an outer wall of the second fixing segment, the second pipe is casted from metal, and the second fixing segment has the outer threads one-piece casted thereon.

Preferably, the second pipe includes a second fixing segment, the second pipe is casted from metal, and the second fixing segment has a quick connector one-piece casted thereon.

Preferably, the rotatable connection assembly further contains: a third pipe which includes a second receiving case and a third fixing segment, wherein the second pipe includes a second fixing segment, the second fixing segment has a first receiving case arranged thereon, the first receiving case has an aperture communicating with the second connection segment, and the first receiving case is rotatably connected with the second receiving case so that the third pipe rotates relative to the second pipe.

Preferably, the rotatable connection assembly further contains: a seal plug fitted with a coupling portion of the first receiving case and the second receiving case, wherein the seal plug has a channel, a central hole, and two abutting rings respectively located on two openings of the first receiving case and the second receiving case, the first receiving case has a threaded column, the second receiving case has a dead hole, and a screw is inserted through the dead hole and the central hole to screw with the threaded column.

Preferably, the rotatable connection assembly further contains: a fourth pipe which includes a fourth fixing segment and a fifth fixing segment, wherein the fourth fixing segment has another peripheral groove and another surround shoulder, another peripheral groove is fitted with another waterproof gasket, and the third fixing segment has another internal fence and another two orifices extending through two sides of another internal fence respectively. The fourth fixing segment is inserted into the third fixing segment and contacts with the internal fence and the waterproof gasket, and another two bolts are accommodated in another two orifices individually so as to engage with another surround shoulder.

A connector assembly for connecting water tubes according to the present invention is provided, comprising: first and second connectors, each connector comprising: a first end for connection to the first end of the other connector; and a second end for connection to a water tube, the first and second connectors connectable to each other to define a bore through the connector assembly with a first axis, wherein: the first end of the first connector is configured to be received within the first end of the second connector, the first end of the first connector comprising: a seal on an outer surface thereof for sealing engagement with an inner surface of the first end of the second connector; and an outer circumferential groove, the first end of the second connector further comprises at least one opening alignable with the groove when the first and second connectors are connected to each other, the connector assembly further comprising: a pin locatable in the or each opening which projects into the groove when the first and second connectors are connected to each other, thereby to retain the first and second connectors in the connected configuration while permitting relative rotation of the first and second connectors about the first axis.

This provides a connector assembly that is easy to assemble and allows rotation between the first and second connectors and hence the water pipes attached thereto.

The connector assembly may further comprise a plurality of openings in the second connector and a corresponding plurality of pins. This allows for a more secure connection.

Each pin may be a threaded pin and each opening may be correspondingly threaded to mate with the thread of the pin. This allows for secure retention of the pin.

The connector assembly of the present invention further comprises a grip sleeve configured to engage with an outer surface of the first connector for applying additional torque thereto. This allows the connector to be made-up easily.

The outer surface of the first connector may comprise a plurality of slots and the grip sleeve may comprise a plurality of projections for engaging with the slots to engage the grip sleeve and the first connector. This is a secure and simple way to provide the grip sleeve.

The connector assembly may further comprise a third connector, the third connector comprising a first and a second end, the second end of the third connector rotatably connectable to the second end of the second connector around a second axis, the second axis transverse to the first axis.

The second end of the third connector or the second end of the second connector may comprises: a connection chamber, with a central projection extending therefrom, the second end of the other of the third connector or the second end of the second connector comprises: a receiving case for receiving the connection chamber, the receiving case comprising a central bore for receiving a fastener to rotatably fasten the receiving case to the central projection. This allows a second connection with a rotation axis perpendicular to the first rotation axis, for more degrees of freedom across the connection.

The connector assembly may further comprise a seal plug retained within the connection chamber, the seal plug comprising: one or more outer projections for engaging with and sealing an inner surface of the connection chamber; and one or more apertures extending through the seal plug for water to flow though. This ensures that the rotatable connection is suitably sealed.

The connector assembly may further comprise a fourth connector, wherein the fourth connector comprises: a first end for connection to the first end of the third connector; and a second end for connection to a water tube, the fourth and third connectors connectable to each other to define a bore through the connector assembly with a third axis, wherein: the first end of the fourth connector is configured to be received within the first end of the third connector, the first end of the fourth connector comprising: a seal on an outer surface thereof for sealing engagement with an inner surface of the first end of the third connector; and an outer circumferential groove, the first end of the third connector further comprises at least one opening alignable with the groove when the fourth and third connectors are connected to each other, the connector assembly further comprising: a pin locatable in the or each opening which projects into the groove when the fourth and third connectors are connected to each other, thereby to retain the fourth and third connectors in the connected configuration while permitting relative rotation of the fourth and third connectors about the third axis. This connection has the same benefits as the connection discussed in relation to claim 1.

### BRIEF DESCRIPTION OF THE DRAWINGS

FIG. 1 is a perspective view showing the exploded components of a rotatable connection assembly for metal water tubes according to a first embodiment of the present invention.
FIG. 2 is a side plan view showing the assembly of the rotatable connection assembly for the metal water tubes according to the first embodiment of the present invention.
FIG. 3 is a cross sectional view taken along the line A-A of FIG. 2.
FIG. 4 is a perspective view showing the exploded components of a rotatable connection assembly for the metal water tubes according to a second embodiment of the present invention.
FIG. 5 is a cross sectional view showing the assembly of the rotatable connection assembly for the metal water tubes according to the second embodiment of the present invention.
FIG. 6 is a perspective view showing the exploded components of a rotatable connection assembly for metal water tubes according to a third embodiment of the present invention.
FIG. 7 is a perspective view showing the assembly of the rotatable connection assembly for the metal water tubes according to the third embodiment of the present invention.
FIG. 8 is a perspective view showing the operation of the rotatable connection assembly for the metal water tubes according to the third embodiment of the present invention.

Corresponding reference characters indicate corresponding parts throughout the drawings.

### DETAILED DESCRIPTION

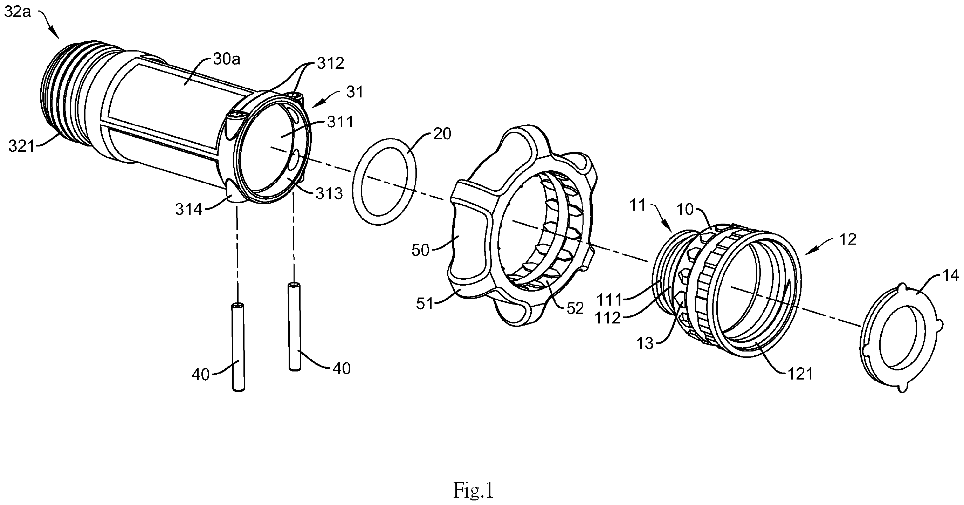

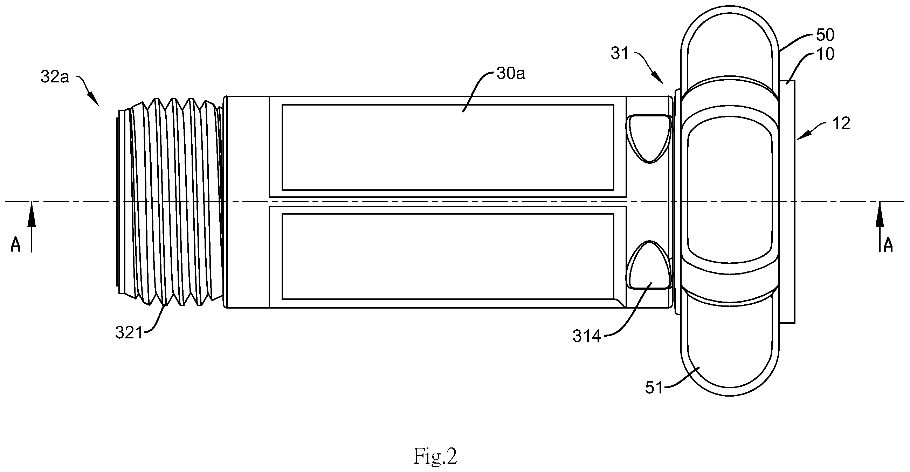

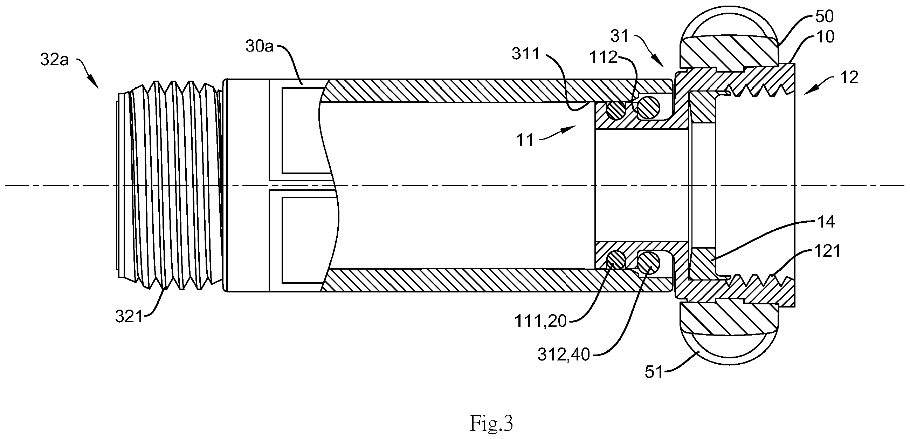

With reference to FIGS. 1-3, a rotatable connection assembly for metal water tubes according to a first embodiment of the present invention comprises: a first pipe or first connector 10, a second pipe or connector assembly 30a, and at least one pin 40. The pin may be threaded to mate with a thread in the second pipe 30a.

The first pipe 10 includes a first end with a first connection segment 11 and a first fixing segment 12 arranged coaxially with the first connection segment 11. In another embodiment, the first fixing segment 12 is arranged perpendicularly to the first connection segment 11 so that the first pipe 10 is formed in an L shape.

The first connection segment 11 has a peripheral groove 111 and a surround shoulder 112 which is circular, wherein the peripheral groove 111 accommodates a waterproof gasket or seal 20 so as to avoid a water leakage. The waterproof gasket 20 is suitable for sealing engagement with an inner surface of the first pipe 10.

The waterproof gasket 20 is made of flexible material, such as rubber, silicone or plastic.

The second pipe 30a includes a first end with a second connection segment 31 which has an internal fence 311 and at least one orifice 312 passing through the internal fence 311. In this embodiment, two pins 40 and two orifices 312 are provided, wherein the two orifices 312 pass through two sides of the internal fence 311 respectively. The first and second pipes 10, 30a connect together to define a bore through the connector assembly with a first axis.

The second connection segment 31 has the two orifices 312 passing through the two sides of the internal fence 311 respectively, and the two pins 40 are inserted into the two orifices 312 respectively.

The second pipe 30a includes a second fixing segment 32a having outer threads 321 formed on an outer wall of the second fixing segment 32a.

In this embodiment, the second connection segment 31 is coaxial with the second fixing segment 32a. In another embodiment, the second connection segment 31 is perpendicular to the second fixing segment 32a so that the second pipe 30a is formed in an L shape.

The first connection segment 11 is inserted into the second connection segment 31, and the internal fence 311 abuts against the waterproof gasket 20 matingly to form a watertight seal.

The two pins 40 are inserted into the two orifices 312 respectively and are retained with the surround shoulder 112, wherein the first pipe 10 is stopped by the two bolts 40 so as to inhibit and/or prevent removal from the second pipe 30a, and the second pipe 30a is rotatably connected with the first pipe 10.

The internal fence 311 has an open portion 313, and the two orifices 312 pass through the open portion 313. A diameter of the open portion 313 is more than that of the internal fence 311 so as to increase a distance between the two orifices 312 and a diameter of the first connection segment 11, thus enhancing a flowing force of water.

An outer diameter of the second connection segment 31 is circular so as to facilitate demolding in a casting process, and the second connection segment 31 has multiple hollow extensions 3 in which the two orifices 312 are defined. In this embodiment, the multiple hollow extensions 3 are located on two ends of the two orifices 312 so as to enhance reinforcement of the second connection segment 31.

The rotatable connection assembly further comprises: a grip sleeve 50 in which multiple cutouts 52 are defined, and the first pipe 10 includes multiple teeth 13 configured to engage with the multiple cutouts 52 individually.

The first pipe 10 is produced in the casting process and is scrubbed by using a sander, wherein the waterproof gasket 20 is matingly engaged with the peripheral groove 111 so as to prevent the water leakage and to eliminate a machining process (i.e., turning by a lathe).

The second pipe 30a is casted from metal, and the second fixing segment 32a has the outer threads 321 one-piece casted thereon and configured to connect with other metal water tubes. The second pipe 30a may be scrubbed by using the sander after being casted.

The grip sleeve 50 is made of plastic or rubber and its multiple cutouts 52 are engaged with the multiple teeth 13 of the first pipe 10 respectively so as to increase friction between the grip sleeve 50 and the first pipe 10, wherein the grip sleeve 50 includes multiple ribs 51 arranged thereon so as to be grasped by a user securely.

The rotatable connection assembly further comprises: a leakproof ring , the first fixing segment 12 has inner threads 121 formed on an inner wall thereof, and the leakproof ring is fitted below a bottom of the inner threads 121.

Thereby, the rotatable connection assembly is connected with a faucet or the metal water tubes which has an outer screwing section.

Preferably, the rotatable connection assembly is not machined precisely so as to reduce machining cost. The rotatable connection assembly is connected easily without using a hand tool (such as a wrench) and avoids the water leakage brilliantly by using the waterproof gasket 20.

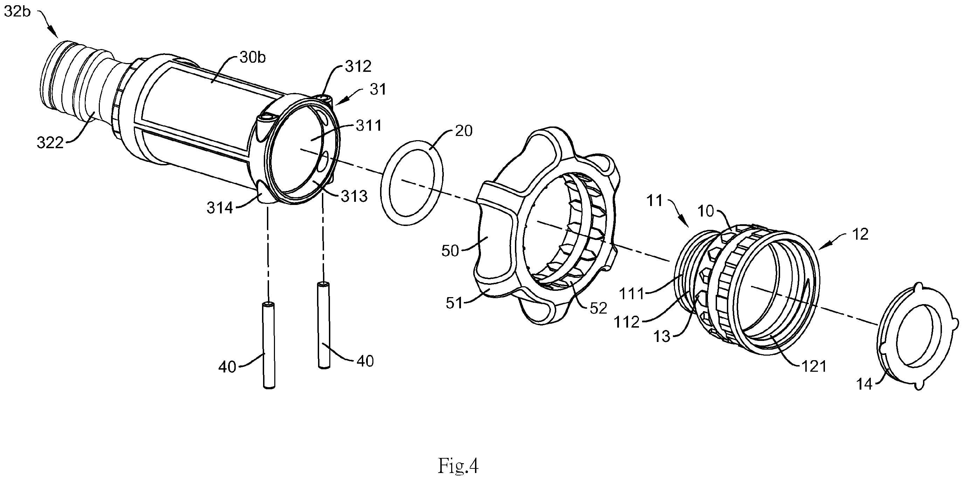

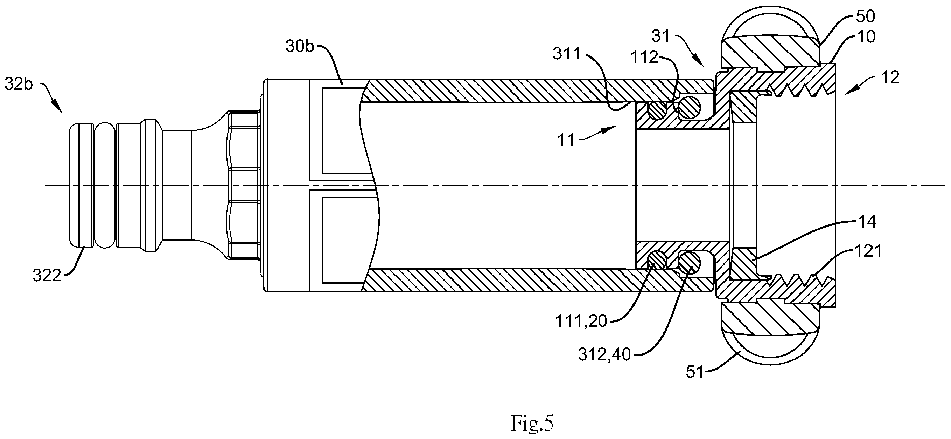

Referring to FIGS. 4 and 5, a rotatable connection assembly of a second embodiment from that of the first embodiment comprises: a quick connector formed on a second fixing segment 32b of a second pipe 30b so as to connect with other metal water tubes.

The second pipe 30b is casted from metal, and the second fixing segment 32b has the quick connector 322 one-piece casted thereon and configured to connect with other metal water tubes, wherein the second pipe 30b is scrubbed by using a sander after being casted.

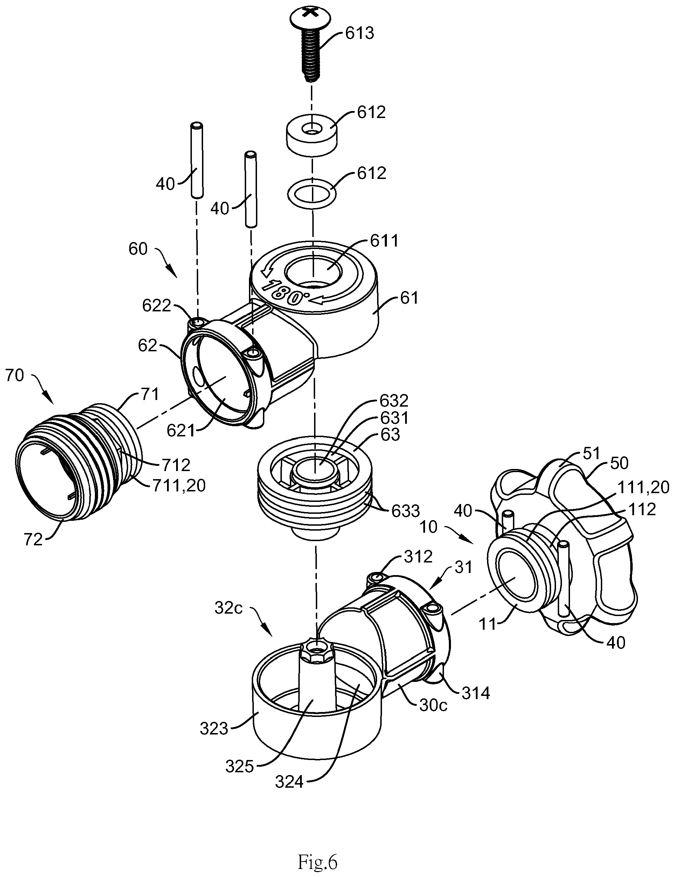

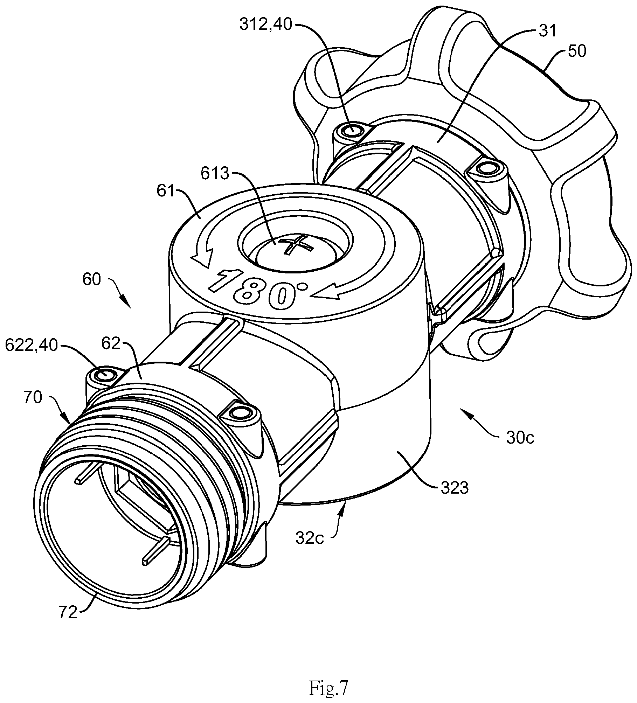

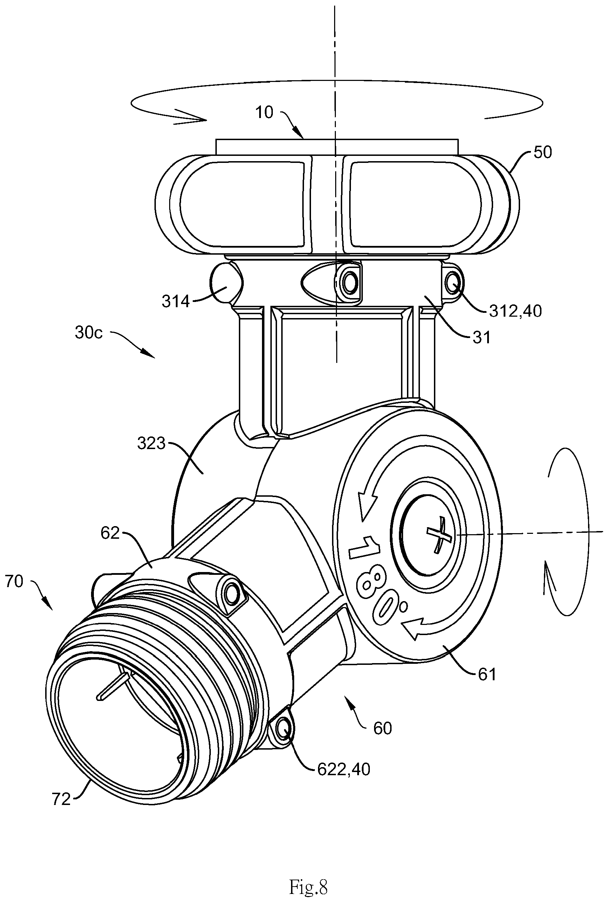

As shown in FIGS. 6-8, a rotatable connection assembly of a third embodiment from that of the first embodiment comprises: a first receiving case 323 arranged on a second fixing segment 32c of a second pipe 30c and a third pipe or third connector 60.

The third pipe 60 includes a second receiving case 61 and a third fixing segment 62, the second fixing segment 32c has the first receiving case 323 arranged thereon, and the first receiving case 323 has an aperture 324 communicating with the second connection segment 31, the first receiving case 323 is rotatably connected with the second receiving case 61 so that the third pipe 60 rotates relative to the second pipe 30c. The first receiving case 323 is in communication with the second connection segment 31 via the aperture 324, and the second receiving case 61 has a through hole (not shown) defined therein and communicating with the third fixing segment 62.

The first receiving case 323 and the second receiving case 61 are cylindrical and are rotatably connected.

A seal plug 63 is fitted with a coupling portion of the first receiving case 323 and the second receiving case 61, wherein the seal plug 63 has a channel 631, a central hole 632, and two abutting rings 633 respectively located on two openings of the first receiving case 323 and the second receiving case 61, wherein first receiving case 323 has a threaded column 325, the second receiving case 61 has a dead hole 611, and a screw 613 is inserted through the dead hole 611 and the central hole 632 to screw with the threaded column 325.

The seal plug 63 is fitted with the coupling portion of the first receiving case 323 and the second receiving case 61 so that the first receiving case 323 rotates relative to the second receiving case 61, and the two abutting rings 633 close the two openings of the first receiving case 323 and the second receiving case 61 respectively so as to avoid a water leakage. The screw 613 is inserted through the dead hole 611 and the central hole 632 to screw with the threaded column 325. The dead hole 611 accommodates one or more washers 612 configured to avoid the water leakage from the dead hole 611.

The rotatable connection assembly further comprises a fourth pipe or fourth connector 70 including a fourth fixing segment 71 and a fifth fixing segment 72, wherein the fourth fixing segment 71 has another peripheral groove 711 and another surround shoulder 712, another peripheral groove 711 is fitted with another waterproof gasket 20, and the third fixing segment 62 has another internal fence 621 and another two orifices 622 extending through two sides of another internal fence 621 respectively, wherein the fourth fixing segment 71 is inserted into the third fixing segment 62 and contacts with the internal fence 311 and the waterproof gasket 20, and another two pins 40 are accommodated in another two orifices 622 individually so as to engage with another surround shoulder 712.

The surround shoulder 712 is the same as the circular surround shoulder 112. Alternatively, the surround shoulder 712 is hexagonal as illustrated in FIG. 6, such that another two bolts 40 are limited by a hexagonal rim of the surround shoulder 712, and the fourth pipe 70 is not rotated relative to the third pipe 60. When the fifth fixing segment 72 has external threads screwing with other metal water tubes, the fourth pipe 70 does not revolve.

Note that the specifications relating to the above embodiments should be construed as exemplary rather than as limitative of the present invention, with many variations and modifications being readily attainable by a person of average skill in the art without departing from the scope thereof as defined by the appended claims.

Having described the invention in detail, it will be apparent that modifications and variations are possible without departing from the scope of the invention defined in the appended claims.

When introducing elements of the present invention or the preferred embodiments thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above constructions, products, and methods without departing from the scope of the invention, it is intended that all matter contained in the above description and shown in the accompanying drawings shall be interpreted as illustrative and not in a limiting sense.

## Claims

1. A connector assembly for connecting water tubes, comprising:
first and second connectors (10, 30a), each connector (10, 30a) comprising:
a first end (11, 31) for connection to the first end (11, 31) of the other connector (10, 30a); and
a second end (12, 32a) for connection to a water tube,
the first and second connectors (10, 30a) connectable to each other to define a bore through the connector assembly with a first axis,
wherein:
the first end (11) of the first connector (10) is configured to be received within the first end (31) of the second connector (30a), the first end (11) of the first connector (10) comprising:
a seal (20) on an outer surface thereof for sealing engagement with an inner surface (311) of the first end (31) of the second connector (30a); and
an outer circumferential groove (111),
the first end (31) of the second connector (30a) further comprises at least one opening (312) alignable with the circumferential groove (111) when the first and second connectors (10, 30a) are connected to each other,
the connector assembly further comprising:
a pin (40) locatable in the or each opening (312) which projects into the circumferential groove (111) when the first and second connectors (10, 30a) are connected to each other, thereby to retain the first and second connectors (10, 30a) in the connected configuration while permitting relative rotation of the first and second connectors (10, 30a) about the first axis,
**characterised in that** the connector assembly further comprises a grip sleeve (50) configured to engage with an outer surface of the first connector (10) for applying additional torque thereto.

2. The connector assembly of claim 1, comprising a plurality of openings (312) in the second connector (30a) and a corresponding plurality of pins (40).

3. The connector assembly of any preceding claim, wherein each pin (40) is a threaded pin and each opening (312) is correspondingly threaded to mate with the thread of the pin (40).

4. The connector assembly of any preceding claim, wherein the outer surface of the first connector (10) comprises a plurality of slots and the grip sleeve (50) comprises a plurality of projections for engaging with the slots to engage the grip sleeve (50) and the first connector (10).

5. The connector assembly of any preceding claim, further comprising a third connector (60), the third connector (60) comprising a first end (62) and a second end (61), the second end (61) of the third connector (60) rotatably connectable to the second end (32a) of the second connector (30a) around a second axis, the second axis transverse to the first axis.

6. The connector assembly of claim 5, wherein:
the second end (61) of the third connector (60) or the second end (32a) of the second connector (30a) comprises:
a connection chamber (323), with a central projection (325) extending therefrom,
the other of the second end (32a) of the second connector (30a) or the second end (61) of the third connector (60) comprises:
a receiving case for receiving the connection chamber (323), the receiving case comprising a central bore for receiving a fastener to rotatably fasten the receiving case to the central projection (325).

7. The connector assembly of claim 6, further comprising a seal plug (63) retained within the connection chamber (323), the seal plug (63) comprising:
one or more outer projections (633) for engaging with and sealing an inner surface of the connection chamber (323); and
one or more apertures (631) extending through the seal plug (63) for water to flow though.

8. The connector assembly of any of claims 5 to 7, further comprising a fourth connector (70), wherein the fourth connector (70) comprises:
a first end (71) for connection to the first end (62) of the third connector (60); and
a second end (72) for connection to a water tube,
the fourth and third connectors (70, 60) connectable to each other to define a bore through the connector assembly with a third axis,
wherein:
the first end (71) of the fourth connector (70) is configured to be received within the first end (62) of the third connector (60), the first end (71) of the fourth connector (70) comprising:
a seal (20) on an outer surface thereof for sealing engagement with an inner surface of the first end (62) of the third connector (60); and
an outer circumferential groove (711),
the first end (62) of the third connector (60) further comprises at least one opening (622) alignable with the circumferential groove (711) when the fourth and third connectors (70, 60) are connected to each other,
the connector assembly further comprising:
a pin (40) locatable in the or each opening (622) which projects into the circumferential groove (711) when the fourth and third connectors (70, 60) are connected to each other, thereby to retain the fourth and third connectors (70, 60) in the connected configuration while permitting relative rotation of the fourth and third connectors (70, 60) about the third axis.

## Patentansprüche

1. Verbinderanordnung zum Verbinden von Wasserrohren, umfassend:
ein erstes und ein zweites Verbindungsstück (10, 30a), wobei jedes Verbindungsstück (10, 30a) umfasst:
ein erstes Ende (11, 31) zum Verbinden mit dem ersten Ende (11, 31) des anderen Verbindungsstücks (10, 30a); und
ein zweites Ende (12, 32a) zum Verbinden mit einem Wasserrohr,
wobei das erste und das zweite Verbindungsstück (10, 30a) miteinander verbindbar sind, um einen Durchgang durch die Verbinderanordnung mit einer ersten Achse zu definieren, wobei:
das erste Ende (11) des ersten Verbindungsstücks (10) konfiguriert ist, um in dem ersten Ende (31) des zweiten Verbindungsstücks (30a) aufgenommen zu werden, wobei das erste Ende (11) des ersten Verbindungsstücks (10) umfasst:
eine Dichtung (20) an einer Außenfläche davon zum abdichtenden Eingriff an einer Innenfläche (311) des ersten Endes (31) des zweiten Verbindungsstücks (30a); und
eine äußere Umfangsnut (111),
wobei das erste Ende (31) des zweiten Verbindungsstücks (30a) ferner mindestens eine Öffnung (312) umfasst, die an der Umfangsnut (111) ausrichtbar ist, wenn das erste und das zweite Verbindungsstück (10, 30a) miteinander verbunden sind,
wobei die Verbinderanordnung ferner umfasst:
einen Stift (40), der in der oder jeder Öffnung (312) positionierbar ist, der in die Umfangsnut (111) hineinragt, wenn das erste und das zweite Verbindungsstück (10, 30a) miteinander verbunden sind, um dadurch das erste und das zweite Verbindungsstück (10, 30a) in der verbundenen Konfiguration zu halten, während eine relative Drehung des ersten und des zweiten Verbindungsstücks (10, 30a) um die erste Achse ermöglicht wird,
**dadurch gekennzeichnet, dass** die Verbinderanordnung ferner eine Griffhülse (50) umfasst, die konfiguriert ist, um mit einer Außenfläche des ersten Verbindungsstücks (10) in Eingriff zu kommen, um ein zusätzliches Drehmoment auf dieses auszuüben.

2. Verbinderanordnung nach Anspruch 1, die eine Mehrzahl von Öffnungen (312) in dem zweiten Verbindungsstück (30a) und eine entsprechende Mehrzahl von Stiften (40) umfasst.

3. Verbinderanordnung nach einem der vorhergehenden Ansprüche, bei der jeder Stift (40) ein Gewindestift ist und jede Öffnung (312) entsprechend mit einem Gewinde versehen ist, um mit dem Gewinde des Stifts (40) zusammenzupassen.

4. Verbinderanordnung nach einem der vorhergehenden Ansprüche, bei der die Außenfläche des ersten Verbindungsstücks (10) eine Mehrzahl von Schlitzen umfasst und die Griffhülse (50) eine Mehrzahl von Vorsprüngen für den Eingriff in die Schlitze umfasst, um die Griffhülse (50) und das erste Verbindungsstück (10) in Eingriff zu bringen.

5. Verbinderanordnung nach einem der vorhergehenden Ansprüche, die ferner ein drittes Verbindungsstück (60) umfasst, wobei das dritte Verbindungsstück (60) ein erstes Ende (62) und ein zweites Ende (61) umfasst, wobei das zweite Ende (61) des dritten Verbindungsstücks (60) mit dem zweiten Ende (32a) des zweiten Verbindungsstücks (30a) um eine zweite Achse drehbar verbindbar ist, wobei die zweite Achse quer zu der ersten Achse verläuft.

6. Verbinderanordnung nach Anspruch 5, bei der:
das zweite Ende (61) des dritten Verbinders (60) oder das zweite Ende (32a) des zweiten Verbinders (30a) eine Verbindungskammer (323) mit einem sich von dort aus erstreckenden zentralen Vorsprung (325) umfasst,
wobei das jeweils andere von dem zweiten Ende (32a) des zweiten Verbinders (30a) oder dem zweiten Ende (61) des dritten Verbinders (60) ein Aufnahmegehäuse zur Aufnahme der Verbindungskammer (323) umfasst, wobei das Aufnahmegehäuse eine zentrale Bohrung zur Aufnahme eines Befestigungsmittels umfasst, um das Aufnahmegehäuse drehbar an dem zentralen Vorsprung (325) zu befestigen.

7. Verbinderanordnung nach Anspruch 6, die ferner einen in der Verbindungskammer (323) gehaltenen Dichtungsstopfen (63) umfasst, wobei der Dichtungsstopfen (63) umfasst:
einen oder mehrere äußere Vorsprünge (633) zum Eingreifen und Abdichten an einer Innenfläche der Verbindungskammer (323); und
eine oder mehrere Öffnungen (631), die sich durch den Dichtungsstopfen (63) erstrecken, durch die Wasser fließen kann.

8. Verbinderanordnung nach einem der Ansprüche 5 bis 7, ferner umfassend ein viertes Verbindungsstück (70), wobei das vierte Verbindungsstück (70) umfasst:
ein erstes Ende (71) zum Verbinden mit dem ersten Ende (62) des dritten Verbindungsstücks (60); und
ein zweites Ende (72) zum Verbinden mit einem Wasserrohr, wobei das vierte und das dritte Verbindungsstück (70, 60) miteinander verbindbar sind, um eine Bohrung durch die Verbinderanordnung mit einer dritten Achse zu definieren, wobei:
das erste Ende (71) des vierten Verbindungsstücks (70) konfiguriert ist, um in dem ersten Ende (62) des dritten Verbindungsstücks (60) aufgenommen zu werden, wobei das erste Ende (71) des vierten Verbindungsstücks (70) umfasst:
eine Dichtung (20) an einer Außenfläche davon zum dichtenden Eingriff an einer Innenfläche des ersten Endes (62) des dritten Verbindungsstücks (60); und
eine äußere Umfangsnut (711),
wobei das erste Ende (62) des dritten Verbindungsstücks (60) ferner mindestens eine Öffnung (622) umfasst, die an der Umfangsnut (711) ausrichtbar ist, wenn das vierte und dritte Verbindungsstück (70, 60) miteinander verbunden sind,
wobei die Verbinderanordnung ferner umfasst:
einen Stift (40), der in der oder jeder Öffnung (622) positionierbar ist, der in die Umfangsnut (711) hineinragt, wenn das vierte und das dritte Verbindungsstück (70, 60) miteinander verbunden sind, um dadurch das vierte und das dritte Verbindungsstück (70, 60) in der verbundenen Konfiguration zu halten, während eine relative Drehung des vierten und des dritten Verbindungsstücks (70, 60) um die dritte Achse ermöglicht wird.

## Revendications

1. Ensemble raccord pour raccorder des tubes d'eau, comprenant :
des premier et deuxième raccords (10, 30a), chaque raccord (10, 30a) comprenant :
une première extrémité (11, 31) à raccorder à la première extrémité (11, 31) de l'autre raccord (10, 30a) ; et
une deuxième extrémité (12, 32a) à raccorder à un tube d'eau,
les premier et deuxième raccords (10, 30a) pouvant être raccordés l'un à l'autre pour définir un alésage à travers l'ensemble raccord avec un premier axe,
dans lequel :
la première extrémité (11) du premier raccord (10) est configurée pour être reçue dans la première extrémité (31) du deuxième raccord (30a), la première extrémité (11) du premier raccord (10) comprenant :
un joint (20) sur une surface externe de celle-ci pour un engagement étanche avec une surface interne (311) de la première extrémité (31) du deuxième raccord (30a) ; et
une rainure circonférentielle externe (111),
la première extrémité (31) du deuxième raccord (30a) comprend en outre au moins une ouverture (312) pouvant être alignée avec la rainure circonférentielle (111) lorsque les premier et deuxième raccords (10, 80a) sont raccordés l'un à l'autre,
l'ensemble raccord comprenant en outre :
une broche (40) pouvant être placée dans la ou chaque ouverture (312) qui fait saillie dans la rainure circonférentielle (111) lorsque les premier et deuxième raccords (10, 30a) sont raccordés l'un à l'autre, pour ainsi retenir les premier et deuxième raccords (10, 30a) dans la configuration raccordée tout en permettant une rotation relative des premier et deuxième raccords (10, 30a) autour du premier axe,
**caractérisé en ce que** l'ensemble raccord comprend en outre un manchon de préhension (50) configuré pour s'engager avec une surface externe du premier raccord (10) pour lui appliquer un couple supplémentaire.

2. Ensemble raccord de la revendication 1, comprenant une pluralité d'ouvertures (312) dans le deuxième raccord (30a) et une pluralité correspondante de broches (40).

3. Ensemble raccord de l'une quelconque des revendications précédentes, dans lequel chaque broche (40) est une broche filetée et chaque ouverture (312) est filetée de manière correspondante pour s'accoupler avec le filetage de la broche (40).

4. Ensemble raccord de l'une quelconque des revendications précédentes, dans lequel la surface externe du premier raccord (10) comprend une pluralité de fentes et le manchon de préhension (50) comprend une pluralité de saillies pour s'engager avec les fentes afin de s'engager avec le manchon de préhension (50) et le premier raccord (10) .

5. Ensemble raccord de l'une quelconque des revendications précédentes, comprenant en outre un troisième raccord (60), le troisième raccord (60) comprenant une première extrémité (62) et une deuxième extrémité (61), la deuxième extrémité (61) du troisième raccord (60) pouvant être raccordée de manière rotative à la deuxième extrémité (32a) du deuxième raccord (30a) autour d'un deuxième axe, le deuxième axe étant transversal au premier axe.

6. Ensemble raccord selon la revendication 5, dans lequel :
la deuxième extrémité (61) du troisième raccord (60) ou la deuxième extrémité (32a) du deuxième raccord (30a) comprend :
une chambre de raccordement (323), avec une saillie centrale (325) s'étendant à partir de celle-ci,
l'autre parmi la deuxième extrémité (32a) du deuxième raccord (30a) et la deuxième extrémité (61) du troisième raccord (60) comprend :
un boîtier de réception pour recevoir la chambre de raccordement (323), le boîtier de réception comprenant un alésage central pour recevoir un élément de fixation afin de fixer de manière rotative le boîtier de réception à la saillie centrale (325).

7. Ensemble raccord de la revendication 6, comprenant en outre un bouchon d'étanchéité (63) retenu dans la chambre de raccordement (323), le bouchon d'étanchéité (63) comprenant :
une ou plusieurs saillies externes (633) pour s'engager avec et sceller une surface interne de la chambre de raccordement (323) ; et
un ou plusieurs orifices (631) s'étendant à travers le bouchon d'étanchéité (63) pour l'écoulement d'eau à travers ceux-ci.

8. Ensemble raccord de l'une quelconque des revendications 5 à 7, comprenant en outre un quatrième raccord (70), dans lequel le quatrième raccord (70) comprend :
une première extrémité (71) pour le raccordement à la première extrémité (62) du troisième raccord (60) ; et
une deuxième extrémité (72) pour le raccordement à un tube d'eau,
les quatrième et troisième raccords (70, 60) pouvant être raccordés l'un à l'autre pour définir un alésage à travers l'ensemble raccord avec un troisième axe,
dans lequel :
la première extrémité (71) du quatrième raccord (70) est configurée pour être reçue dans la première extrémité (62) du troisième raccord (60), la première extrémité (71) du quatrième raccord (70) comprenant :
un joint (20) sur une surface externe de celle-ci pour un engagement étanche avec une surface interne de la première extrémité (62) du troisième raccord (60) ; et
une rainure circonférentielle externe (711),
la première extrémité (62) du troisième raccord (60) comprend en outre au moins une ouverture (622) pouvant être alignée avec la rainure circonférentielle (711) lorsque les quatrième et troisième raccords (70, 60) sont raccordés l'un à l'autre,
l'ensemble raccord comprenant en outre :
une broche (40) pouvant être placée dans la ou chaque ouverture (622) qui fait saillie dans la rainure circonférentielle (711) lorsque les quatrième et troisième raccords (70, 60) sont raccordés l'un à l'autre, pour ainsi retenir les quatrième et troisième raccords (70, 60) dans la configuration raccordée tout en permettant une rotation relative des quatrième et troisième raccords (70, 60) autour du troisième axe.
